Europäisches Patentamt

European Patent Office

Office européen des brevets

(11) Veröffentlichungsnummer : **0 106 129 B1**

# (12) EUROPÄISCHE PATENTSCHRIFT

(45) Veröffentlichungstag der Patentschrift :
20.08.86

(21) Anmeldenummer : 83108875.2

(22) Anmeldetag : 08.09.83

(51) Int. Cl.⁴ : **C 08 J 9/16, C 08 F 2/38, C 08 F112/08** // (C08J9/16, C08L25:06)

(54) Teilchenförmiges, treibmittelhaltiges Polystyrol mit verbesserter Expandierbarkeit.

(30) Priorität : 18.09.82 DE 3234660

(43) Veröffentlichungstag der Anmeldung :
25.04.84 Patentblatt 84/17

(45) Bekanntmachung des Hinweises auf die Patenterteilung : 20.08.86 Patentblatt 86/34

(84) Benannte Vertragsstaaten :
BE DE FR GB IT NL

(56) Entgegenhaltungen :
DE-A- 1 939 696
FR-A- 1 480 502
FR-A- 2 268 829
GB-A- 645 035
CHEMICAL ABSTRACTS, Band 94, Nr. 6, 9 Februar 1981, Seite 51, nr. 94:31781a COLUMBUS, OHIO (US)

(73) Patentinhaber : BASF Aktiengesellschaft
Carl-Bosch-Strasse 38
D-6700 Ludwigshafen (DE)

(72) Erfinder : Hahn, Klaus, Dr.
Im Buegen 9
D-6719 Kirchheim (DE)
Erfinder : Wittmer, Paul, Dr.
Ostring 29
D-6740 Landau (DE)
Erfinder : De Grave, Isidoor, Dr.
Mandelring 3
D-6706 Wachenheim (DE)
Erfinder : Schick, Rupert, Dr.
Ruwerstrasse 3
D-6703 Limburgerhof (DE)
Erfinder : Echte, Adolf, Dr.
Leuschnerstrasse 42
D-6700 Ludwigshafen (DE)

0 106 129

## Beschreibung

Die Erfindung betrifft treibmittelhaltiges Polystyrol mit verbesserter Expandierbarkeit. das durch seine Molekulargewichtsverteilung charakterisiert ist. sowie Verfahren zu seiner Herstellung und Anwendung.

Zur Herstellung von Polystyrol-Schaumstoffen werden bekanntlich verschäumbare treibmittelhaltige Polymerisatteilchen so lange auf Temperaturen oberhalb ihres Erweichungspunktes erhitzt. bis sie zu einem losen Haufwerk mit dem gewünschten Schüttgewicht aufgeschäumt sind. Dieser Vorgang wird als « Vorschäumen » bezeichnet.

Es ist erwünscht, daß die treibmittelhaltigen Polymerisatteilchen sich möglichst schnell. d. h. mit hohem Durchsatz zu niedrigen Raumgewichten verschäumen lassen. Die Expandierbarkeit der Polymerisatteilchen kann durch übliche niedermolekulare Weichmacher verbessert werden, die aber den Nachteil haben, daß sie beim Ausschäumen der vorgeschäumten Teilchen zu Schaumstoff-Formkörpern deren Dimensionsstabilität nachteilig beeinflussen.

Nach der DE-A 19 39 696 kann die Expandierbarkeit von Polymerisatteilchen aus Styrol/Acrylnitril-Copolymeren verbessert werden. wenn man das Molekulargewicht durch Kettenübertragungsmittel. z. B. Iod oder Dodecylmercaptan, erniedrigt. In den Beispielen wird das Kettenübertragungsmittel bei der Herstellung der Polymerisatteilchen zu Beginn der Suspensionspolymerisation zugegeben. Ein ähnliches Verfahren ist in den Beispielen 8 und 9 der DE-A 15 95 627 beschrieben. Es hat sich gezeigt. daß bei dieser Arbeitsweise ein Polymerisat mit sehr hohem Restmonomergehalt entsteht. das beim Verschäumen stark schrumpft und sich daher nicht zu brauchbaren Formteilen verarbeiten läßt.

Der Erfindung lag die Aufgabe zugrunde, die Expandierbarkeit von teilchenförmigem, treibmittelhaltigem Polystyrol so zu verbessern, daß es mit hohen Durchsatzraten zu niedrigen Raumgewichten verschäumt werden kann, ohne daß die Dimensionsstabilität von daraus hergestellten Schaumstoff-Formkörpern negativ beeinflußt wird.

Diese Aufgabe wird durch das erfindungsgemäße teilchenförmige treibmittelhaltige Polystyrol gelöst.

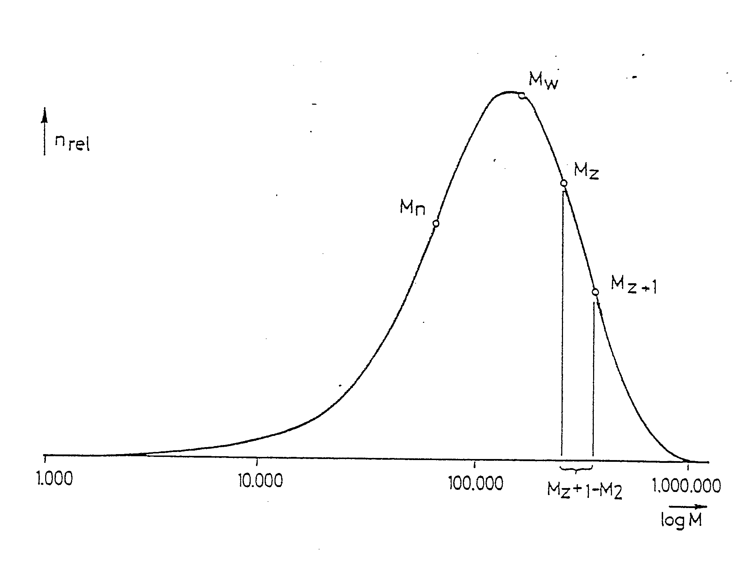

Die erfindungsgemäßen treibmittelhaltigen Polystyrolteichen unterscheiden sich von solchen nach dem Stand der Technik durch ihr Molekulargewicht und ihre Molekulargewichtsverteilung. Das Molekulargewicht wird durch Gelpermeationschromatographie ermittelt. Die GPC-Methode ist ausführlich beschrieben in G. Glöckler, Polymercharkaterisierung, Chromatographische Methoden Band 17, Hüthig-Verlag, Heidelberg 1982. Erfindungsgemäß weist das Polystyrol ein mittleres Molekulargewicht $M_w$ (Gewichtsmittel) zwischen 130.000 und 180.000, vorzugsweise zwischen 140.000 und 175.000 und insbesondere zwischen 142.000 und 172.000 auf. Es ist ferner durch seine Molekulargewichtsverteilung charakterisiert, wobei die hochmolekulare Flanke der Molekulargewichtsverteilungskurve so steil sein muß. daß die Differenz der Mittelwerte $(M_{Z-1} — M_Z)$ weniger als $150 \cdot 10^3$, vorzugsweise weniger als $130 \cdot 10^3$ und insbesondere weniger als $120 \cdot 10^3$ beträgt. Die genannten Mittelwerte sind beschrieben und definiert bei H. G. Elias, Makromoleküle, Hüthig-Verlag 1971, Seiten 52 und 64. Die Abbildung zeigt eine typische, durch GPC-Messungen erhaltene Molekulargewichtsverteilungskurve, in der die relative Häufigkeit $n_{rel}$ der Polymerketten eines bestimmten Molekulargewichts gegen das Molekulargewicht aufgetragen ist. $M_w$ ist das Gewichtsmittel und $M_n$ das Zahlenmittel ; $M_Z$ und $M_{Z-1}$ sind weitere Mittelwerte, die nach Elias rechnerisch bestimmt werden können und auf der hochmolekularen Flanke der Kurve liegen. Ihre Differenz $(M_{Z-1} — M_Z)$ ist ein Maß für die Steilheit dieses Kurventeils.

Die Polystyrolteilchen enthalten in homogener Verteilung ein oder mehrere Treibmittel. Als Treibmittel eignen sich z. B. unter Normalbedingungen gasförmige oder flüssige Kohlenwasserstoffe oder Halogenwasserstoffe. die das Styrolpolymerisat nicht lösen und deren Siedepunkt unter dem Erweichungspunkt des Polymerisats liegt. Geeignete Treibmittel sind z. B. Propan. Butan, Pentan, Cyclopentan. Hexan. Cyclohexan, Dichlordifluormethan und Trifluorchlormethan. Die Treibmittel sind in den Polystyrolteilchen im allgemeinen in Mengen zwischen 3 und 12 Gew.%. vorzugsweise zwischen 5 und 8 Gew.%. bezogen auf das Polystyrol, enthalten.

Die Polystyrolteilchen können auch Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan, Chlorparaffin sowie Synergisten für Flammschutzmittel, wie Dicumyl und hochzersetzliche organische Peroxide ; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z. B. Glycerinester oder Hydroxycarbonsäureester. Die Zusatzstoffe können je nach der beabsichtigten Wirkung in den Teilchen homogen verteilt oder als Oberflächenbeschichtung vorliegen.

Nach einem bevorzugten Verfahren werden die erfindungsgemäßen treibmittelhaltigen Polystyrolteilchen hergestellt durch Polymerisation von Styrol in wäßriger Suspension. wobei vor. während oder nach der Polymerisation die oben beschriebenen Treibmittel zugesetzt werden. Während der Polymerisation bei einem Styrol-Umsatz zwischen 20 und 90 % werden 0,01 bis 0.5 Gew.%. vorzugsweise 0.05 bis 0.3 Gew.% einer bromfreien organischen Verbindung mit einer Kettenübertragungskonstanten K zwischen 0.1 und 50 zugegeben.

Es ist bekannt, daß Kettenüberträger oder Regler das Molekulargewicht von Styrolpolymerisaten herabsetzen. Dies macht man sich bei der Herstellung von Polystyrol mit verbesserter Fließfähigkeit zunutze, wobei man dem Polymerisationsansatz 0.01 bis 0,05 Gew.% eines Reglers, z. B. Dodecylmercaptan zusetzt. Diese einfache Arbeitsweise führt bei expandierbarem Polystyrol nicht zum Ziel: Gibt man hier die Kettenüberträger bereits vor der Polymerisation zu, so erhält man treibmittelhaltige Polystyrolteilchen, die nach der Expansion stark schrumpfen und bei der Versinterung Schaumstoff-Formkörper mit geringer Dimensionsstabilität ergeben.

Nach der DE-A 24 48 476 werden bei der Herstellung von treibmittelhaltigen Polystyrolteilchen gegen Ende der Suspensionspolymerisation Bromverbindungen zugesetzt. Diese bewirken, daß nach dem Verschäumen expandierte Polystyrolteilchen mit sehr feinzelliger Randzone entstehen. Einige dieser Bromverbindungen wirken ebenfalls regelnd. Setzt man die genannte Bromverbindung vor einem Umsatz von 90 % der Styrolpolymerisation zu, so erhält man nach dem Verschäumen expandierte Teilchen mit durchgehend feinzelliger Struktur, die Schaumstoff-Formkörper mit viel zu geringer Dimensionsstabilität und starker Neigung zum Einfallen ergeben.

In der EP-B 9 556 sind feinteilige expandierbare Styrolpolymerisate beschrieben, die 0.000 05 bis 0.01 % organischer Bromverbindungen, z. B. Hexabrombuten-(2) enthalten. Der Zusatz der Bromverbindungen bei der Polymerisation bewirkt, daß feinzellige Schaumstoffe mit niedrigen Mindestformverweilzeiten entstehen. In der Patentschrift wird ausgeführt, daß bei Einsatz der Bromverbindungen in den beanspruchten niedrigen Konzentrationen ein Einfluß auf das Molekulargewicht des Polystyrols nicht zu erkennen ist. Darüber hinaus hat sich gezeigt, daß bei Anwendung höherer Konzentrationen das Molekulargewicht und die Molekulargewichtsverteilung zwar gezielt beeinflußt werden kann, daß dann aber Schaumstoffe mit extrem feinzelliger Struktur entstehen, die eine schlechte Dimensionsstabilität und ungenügende Wärmeleitzahl aufweisen.

Die Suspensionspolymerisation von Styrol ist an sich bekannt. Sie ist ausführlich beschrieben im Kunststoff-Handbuch, Band V, « Polystyrol », Carl Hanser-Verlag, Seiten 679 bis 688. Dabei wird Styrol in Wasser suspendiert, wobei übliche organische oder anorganische Suspensionsstabilisatoren, vorzugsweise in Mengen zwischen 0,05 und 2 Gew.%, bezogen auf die Suspension, zugesetzt werden. Die Polymerisation wird im allgemeinen bei einer Temperatur zwischen 80 und 130 °C, vorzugsweise zwischen 100 und 120 °C ausgeführt. Zum Starte der Polymerisation werden organische Polymerisationsinitiatoren, z. B. Peroxide oder Azoverbindungen verwendet, die unter dem Einfluß der Wärme in Radikale zerfallen. Sie werden in Mengen von 0,01 bis 1 Gew.%, bezogen auf die Monomeren, eingesetzt.

Die Kettenüberträger werden dem Polymerisationsansatz bei einem Umsatz zwischen 20 und 90 %, vorzugsweise zwischen 40 und 60 % zugesetzt. Unter Umsatz ist der prozentuale Anteil der polymerisierten Monomeren, bezogen auf die gesamten eingesetzten Monomeren, zu verstehen. Er kann beispielsweise dadurch gemessen werden, daß man die Polymerisation nach einer gewissen Zeit abbricht, z. B. durch Zusatz von Inhibitoren, und die Menge der nicht polymerisierten Monomeren bestimmt.

Es werden Kettenüberträger mit einer Übertragungskonstanten K (nach Vollmert, Grundriß der Makromolekularen Chemie, Springer Verlag 1962, Seiten 52 und 71) zwischen 0,1 und 50, bevorzugt zwischen 1 und 30, verwendet. In Frage kommen beispielsweise:

| | |
|---|---|
| n-Dodecylmercaptan | (K = 19) |
| tert.-Dodecylmercaptan | (K = 3) |
| n-Butylmercaptan | (K = 22) |
| tert.-Butylmercaptan | (K = 3,6) |
| Pentaphenylethan | (K = 2,0) |

Nach einem anderen bevorzugten Verfahren werden die erfindungsgemäßen treibmittelhaltigen Polystyrolteilchen hergestellt durch Polymerisation von Styrol in Gegenwart von Treibmitteln, wobei bei einem Umsatz zwischen 0 und 90 % 0,1 bis 10 Gew.% eines Styrol-Oligomeren zugegeben wird.

Styrol-Oligomere sind bekannt. Sie können z. B. hergestellt werden durch kontinuierliche thermische Polymerisation von Styrol unter erhöhtem Druck. Ihr mittleres Molekulargewicht (Zahlenmittel) liegt zwischen 500 und 5 000, vorzugsweise zwischen 800 und 2 000.

Die erfindungsgemäßen treibmittelhaltigen Polystyrol-Teilchen haben im allgemeinen einen Durchmesser zwischen 0,2 und 4 mm. Sie können nach üblichen Methoden, z. B. mit Wasserdampf, zu Schaumstoffteilchen mit einem Durchmesser zwischen 0,5 und 2 cm und einer Dichte zwischen 5 und 100 g . l$^{-1}$ vorgeschäumt werden. Es zeigt sich, daß dabei der Durchsatz durch die zudosierten Kettenüberträger bzw. Styrol-Oligomeren erheblich erhöht wird.

Die vorgeschäumten Teilchen können dann nach üblichen Verfahren zu Schaumstoff-Formteilen mit einem Raumgewicht von 5 bis 100 g . l$^{-1}$ ausgeschäumt werden.

Der Zusatz von Kettenüberträgern bzw. Styrol-Oligomeren beeinflußt das Molekulargewicht und die Molekulargewichtsverteilung der entstehenden Polymeren, und damit auch deren rheologische Eigenschaften, die ihrerseits für die Expandierbarkeit der treibmittelhaltigen Polystyrolteilchen und die Dimensionsstabilität von daraus hergestellten Schaumstoff-Formkörpern verantwortlich sind. So führt z. B. eine Erniedrigung der Dehnviskosität zu besserer Expandierbarkeit und eine Absenkung der reversiblen Dehnung bei gleicher Dehnviskosität zu besserer Dimensionsstabilität. Beide Eigenschaften

3

können an den treibmittelhaltigen Styrolpolymerisat-Teilchen direkt nach einer Vorschrift in « Prüfung hochpolymerer Werstoffe », Carl Hanser Verlag Wien, 1977, Seite 422, gemessen werden :

Die Polystyrol-Teilchen werden durch Erhitzen auf 155 °C aufgeschmolzen und 5 min lang entgast, wobei das Treibmittel verdampft. Durch Extrusion wird ein Polymerstrang mit einer Länge von 20 mm und einem Durchmesser von 5 mm hergestellt. Die Probe wird in eine Zugapparatur eingespannt, die sich in 150 °C heißem Silikonöl befindet. Dort wird sie mit einer Zugspannung von $2 \cdot 10^4$ Pa auf eine Länge von 300 mm gedehnt. Die Dehnviskosität $\mu$ ergibt sich als Verhältnis von Zugkraft zu Dehngeschwindigkeit. Nach dem Aufheben der Zugspannung schrumpft die Probe wieder. Die reversible Dehnung $E_r$ ist der natürliche Logarithmus des Verhältnisses Ausgangslänge der Probe zur Länge der Probe nach dem Schrumpfen.

Die erfindungsgemäßen treibmittelhaltigen Polystyrolteilchen haben — gemessen nach der beschriebenen Methode — eine Dehnviskosität von weniger als $4,2 \cdot 10^6$ [Pas], vorzugsweise von 1,5 bis $3,0 \cdot 10^6$ [Pas] und eine reversible Dehnung von weniger als 0,95, vorzugsweise von 0,6 bis 0,9.

Die im Beispiel genannten Teile und Prozente beziehen sich auf das Gewicht.

## Beispiel

### A. Polymerisation

In einem druckfesten Rührkessel aus korrosionsfreiem Stahl wurde eine Mischung aus 150 Teilen Wasser, 0,1 Teilen Natriumpyrophosphat, 100 Teilen Styrol, 7 Teilen n-Pentan, 0,45 Teilen Benzoylperoxid und 0,15 Teilen t.-Butylperbenzoat (als Polymerisationsinitiatoren) unter Rühren auf 90 °C erhitzt.

Nach 2 Stunden bei 90 °C wurden 4 Teile einer 10 %igen wäßrigen Lösung von Polyvinylpyrrolidon zugegeben.

Dann wurde weitere 2 Stunden bei 90 °C, anschließend 2 Stunden bei 100 °C und schließlich 2 Stunden bei 120 °C gerührt. Die Kettenüberträger bzw. die Styrol-Oligomeren wurden nach dem in der Tabelle angegebenen Umsatz in den Rührkessel zudosiert. Das erhaltene Granulat mit einem mittleren Teilchendurchmesser von 1,5 mm wurde isoliert und getrocknet.

### B. Beschichtung

100 Teile des expandierbaren Polystyrol-Granulats mit einer Perlfraktion zwischen 1,0 und 2,3 mm Durchmesser wurden durch Auftrommeln im Schaufelmischer jeweils 3 Minuten lang mit 0,4 Teilen Glycerinmonostearat beschichtet.

### C. Verarbeitung

Die beschichteten EPS-Perlen wurden in einem kontinuierlichen Rührvorschäumer, Typ Rauscher, mit strömendem Wasserdampf auf ein Schüttgewicht von 15 g/l ± 0,1 g/l vorgeschäumt und der Durchsatz in kg/h bestimmt.

Anschließend wurden die Produkte 24 Stunden zwischengelagert und in einer Blockform, Typ Rauscher, durch Bedampfung mit einem Druck von 1,8 bar während 20 Sekunden zu einem Block verschweißt.

Die angegebenen Werte für die Schwindung wurden aus der Differenz zwischen den Forminnenmaßen bei Raumtemperatur und den Maßen des auf Raumtemperatur abgekühlten etwa 24 Stunden alten Schaumstoffblocks berechnet. Sie ist in Prozent, bezogen auf das Forminnenmaß, angegeben. Die Ergebnisse sind in der Tabelle zusammengestellt.

### D. Molekulargewichtsmessung

Die mittleren Molekulargewichte und die Molekulargewichtsverteilung wurden nach der GPC-Methode bestimmt. Dabei wurde eine Säulenkombination zusammengestellt, die sowohl im niedermolekularen wie im hochmolekularen Bereich eine möglichst optimale Auftrennung gewährleistet.

Die Säulenkombination besteht aus 5 hintereinandergeschalteten Säulen. Bei einer Einzellänge von je L = 300 und einem Innendurchmesser $D_i$ = 10 mm wurden folgende Silica-Säulen verwendet :

$$1 \times Si \quad 60$$
$$1 \times Si \quad 100$$
$$1 \times Si \quad 300$$
$$2 \times Si \; 1\,000$$

Das Füllmaterial sind LiChrospher und LiChrosorb der Fa. Merck (Silicagele) mit einer Korngröße von 10 μm (Ausnahme Si 60 = LiChrosorb).

Der Durchfluß beträgt 2,8 ml/min, das Lösungsmittel für die Polystyrolteilchen ist Tetrahydrofuran.

Es wurden von einer 0,5 %igen Lösung 200 μl bei Zimmertemperatur eingespritzt. Als Detektor ist ein Differentialrefraktometer der Fa. Knauer, Dual-Detektor Typ 61.00 eingebaut. Zur Kontrolle der gleichmäßigen Durchflußgeschwindigkeit wird ein Tropfenzähler verwendet.

Zur Umrechnung der dabei erhaltenen Meßwerte auf das Molekulargewicht wird parallel aus 12 engverteilten Polystyrolproben der Fa. Pressure Chemical Co. mit bekanntem Molekulargewicht eine Eichkurve erstellt.

Zur Standardisierung der verwendeten Säulenkombination wird die vom National Bureau of Standards charakterisierte breite Polystyrolprobe Nr. 706 gemessen. Dabei ergaben sich folgende Mittelwerte für das Molekulargewicht dieser Polystyrolprobe :

$$M_n = 74.000$$
$$M_w = 243.000$$
$$M_z = 392.000$$

(Siehe Tabelle Seite 6 f.)

Tabelle

| Zusatz | | — | t-DM | t-DM | t-DM | t-DM | n-DM | | Oligostyrol | |
|---|---|---|---|---|---|---|---|---|---|---|
| Übertragungskonst. | | — | 3 | 3 | 3 | 3 | 3 | 9 | — | — |
| Konzentration | % | — | 0,05 | 0,1 | 0,1 | 0,3 | 0,3 | 0,3 | 1 | 1,5 |
| Umsatz | % | — | 40 | 40 | 0 | 55 | 0 | 40 | 0 | 0 |
| Durchsatz | kg/h | 110 | 130 | 160 | 1) | 220 | 1) | 150 | 140 | 190 |
| Schwindung | % | 1,9 | 1,6 | 1,8 | — | 2,0 | — | 2,1 | 1,6 | 2,0 |
| Dehnviskosität | $10^6$ Pas | 5,5 | 2,2 | 3,4 | 0,8 | 2,6 | 0,6 | 4,1 | 2,7 | 2,6 |
| reversible Dehnung | | 1,08 | 0,83 | 0,89 | — | 0,72 | — | 0,88 | 0,87 | 0,71 |
| $M_h$ | $.10^3$ | 70 | 65 | 62 | 49 | 56 | 40 | — | 56 | 62 |
| $M_w$ | $.10^3$ | 221 | 164 | 156 | 108 | 134 | 95 | — | 168 | 166 |
| $M_{z+1} - M_z$ | $.10^3$ | 163 | 102 | 103 | — | 133 | — | — | 140 | 111 |

In der Tabelle bedeuten :
t-DM : tert.-Dodecylmercaptan
n-DM : n-Dodecylmercaptan
Oligostyrol : Molekulargewicht 1 200
1) Die Granulate ließen sich nicht zu Schaumstoffen verarbeiten, da sie infolge ihres hohen Monostyrolgehalts (~ 1 %) bereits beim Vorschäumen zu stark verkleber.

## Patentansprüche

1. Teilchenförmiges, treibmittelhaltiges Polystyrol mit verbesserter Expandierbarkeit, dadurch gekennzeichnet, daß das Polystyrol ein mittleres Molekulargewicht $M_w$ (Gewichtsmittel), gemessen nach der GPC-Methode zwischen 130 000 und 180 000 aufweist, und daß die hochmolekulare Flanke der nach der GPC-Methode gemessenen Molekulargewichtsverteilungskurve so steil ist, daß die Differenz der Mittelwerte ($M_{z-1} - M_z$) weniger als $150 \cdot 10^3$ beträgt.

2. Verfahren zur Herstellung von teilchenförmigem, treibmittelhaltigem Polystyrol durch Polymerisation von Styrol in wäßriger Suspension und Zusatz von flüchtigen organischen Treibmitteln vor, während oder nach der Polymerisation, dadurch gekennzeichnet, daß während der Polymerisation bei einem Umsatz zwischen 20 und 90 % 0,01 bis 0,5 Gew.% einer bromfreien organischen Verbindung mit einer Kettenübertragungskonstanten K zwischen 0,1 und 50 zugegeben werden.

3. Verfahren nach Anspruch 2, dadurch gekennzeichnet, daß als Kettenüberträger Mercaptane, vorzugsweise tert.-Dodecylmercaptan, eingesetzt werden.

4. Verfahren zur Herstellung von teilchenförmigem, treibmittelhaltigem Polystyrol durch Polymerisation von Styrol in wäßriger Suspension und Zusatz von flüchtigen organischen Treibmitteln vor, während oder nach der Polymerisation, dadurch gekennzeichnet, daß während der Polymerisation bei einem Umsatz zwischen 0 und 90 % 0,1 bis 10 Gew.% eines Styrol-Oligomeren mit einem mittleren Molekulargewicht (Zahlenmittel) zwischen 500 und 5 000 zugegeben werden.

5. Verwendung des teilchenförmigen, treibmittelhaltigen Polystyrols nach Anspruch 1 zur Herstellung von Schaumstoff-Formkörpern mit einem Raumgewicht von 5 bis 100 g $\cdot$ l$^{-1}$.

## Claims

1. A particulate polystyrene containing blowing agent and having improved expandability, wherein the polystyrene has a weight-average mean molecular weight $M_w$, measured by gel permeation chromatography, of from 130 000 to 180 000, and the high molecular weight flank of the molecular weight distribution curve, the molecular weight being measured by the same method, is so steep that the difference between the mean values ($M_{z-1} - M_z$) is less than $150 \times 10^3$.

2. A process for the preparation of a particulate polystyrene containing blowing agent by polymerization of styrene in aqueous suspension and addition of volatile organic blowing agents before, during or after the polymerization, wherein from 0.01 to 0.5 % by weight of a bromine-free organic compound having a chain transfer constant K of from 0.1 to 50 is added during the polymerization, at a conversion of from 20 to 90 %.

3. A process as claimed in claim 2, wherein a mercaptan, preferably tert.-dodecyl mercaptan, is used as the chain transfer agent.

4. A process for the preparation of a particulate polystyrene containing blowing agent by polymerization of styrene in aqueous suspension and addition of volatile organic blowing agents before, during or after the polymerization, wherein from 0.1 fo 10 % by weight of a styrene oligomer having a number-average mean molecular weight of from 500 to 5 000 is added during the polymerization, at a conversion of from 0 to 90 %.

5. The use of a particulate polystyrene containing blowing agent, as claimed in claim 1, for the production of foam moldings having a density of from 5 to 100 g $\cdot$ l$^{-1}$.

## Revendications

1. Polystyrène en fines particules, contenant un gonflant, et d'expansibilité améliorée, caractérisé par le fait que le polystyrène possède un poids moléculaire moyen $M_w$ (poids moyen, mesuré selon la méthode GPC) compris entre 130 000 et 180 000, et que le flanc des hauts poids moléculaires de la courbe de distribution des poids moléculaires, mesurés par la méthode GPC, est si raide que la différence des valeurs moyennes ($M_{z-1} - M_z$) est inférieure à $150 \cdot 10^3$.

2. Procédé de préparation de polystyrène en fines particules, contenant un gonflant, par polymérisation de styrène en suspension aqueuse et addition de gonflants organiques volatils, avant, pendant ou après la polymérisation, caractérisé par le fait que, pendant la polymérisation, avec un rendement compris entre 20 et 90 %, on ajoute 0,01 à 0,5 % en poids d'un composé organique exempt de brome, d'une constante de transfert de chaîne K compris entre 0,1 et 50.

3. Procédé selon la revendication 2, caractérisé par le fait que, comme agent de transfert de chaîne, on introduit des mercaptans, de préférence du tert.-dodécylmercaptan.

4. Procédé de préparation de polystyrène en fines particules, contenant un gonflant, par polymérisation de styrène en suspension aqueuse et addition de gonflants organiques volatils, avant, pendant ou après la polymérisation, caractérisé par le fait que, pendant la polymérisation, avec un rendement compris entre 0 et 90 %, on ajoute 0,1 à 10 % en poids d'un oligomère de styrène, d'un poids moléculaire moyen (moyenne numérique) compris entre 500 et 5 000.

5. Utilisation du polystyrène en fines particules contenant un gonflant selon la revendication 1, pour la préparation de corps moulés alvéolaires d'un poids spécifique de 5 à 100 g $\cdot$ l$^{-1}$.